# EUROPÄISCHE PATENTANMELDUNG

(11) **EP 0 790 159 A1**
(43) Veröffentlichungstag der Anmeldung: **20.08.1997**
(21) Anmeldenummer: 97101351.1
(22) Anmeldetag: 29.01.1997
(51) Int. Cl.: B60R 22/02, B60R 22/26

(54) **Dreipunkt-Sicherheitsgurtsystem für Fahrzeuge**

(30) Priorität: 16.02.1996 DE 29602811 U
(71) Anmelder: TRW Occupant Restraint Systems GmbH, 73551 Alfdorf (DE)
(72) Erfinder: Pfeifle, Dieter, 70794 Filderstadt-Plattenhardt (DE)
(74) Vertreter: Degwert, Hartmut, Dipl.-Phys.

(57) **Zusammenfassung**

Die Erfindung betrifft ein Dreipunkt-Sicherheitsgurtsystem für Fahrzeuge, mit einem Gurtaufroller (12), der unter der Sitzfläche (10) eines Fahrzeugsitzes an diesem angebracht ist, einem Sicherheitsgurt (16), dessen erstes Gurtbandende (18) am Fahrzeugaufbau oder an der Rückenlehne des Fahrzeugsitzes verankert und dessen zweites Gurtbandende auf dem Gurtaufroller (12) aufgewickelt ist, und einer verschiebbar auf dem Sicherheitsgurt (16) angebrachten Steckzunge (22) für ein Gurtschloß (24).

## Beschreibung

Die Erfindung betrifft ein Dreipunkt-Sicherheitsgurtsystem für Fahrzeuge. Üblicherweise enthält ein Dreipunkt-Sicherheitsgurtsystem einen Gurtaufroller, der bei einem Vordersitz im unteren Bereich der B-Säule und bei einem Rücksitz im Bereich der C-Säule am Fahrzeug befestigt ist. Von dem Gurtaufroller ausgehend verläuft der Sicherheitsgurt zuerst nach oben zu einem an der B- bzw. C-Säule angebrachten Umlenkbeschlag, und von diesem verläuft der Sicherheitsgurt wieder nach unten zu einer Verankerungsstelle, an der ein erstes Gurtbandende des Sicherheitsgurtes am Fahrzeug verankert ist. Außerdem sind Dreipunkt-Sicherheitsgurtsysteme bekannt, bei denen der Gurtaufroller in der Rückenlehne des Sitzes oder im Falle eines Sicherheitsgurtsystems für einen Rücksitz im Bereich der Hutablage des Fahrzeuges angebracht ist und der Sicherheitsgurt ohne einen Umlenkbeschlag vom Gurtaufroller zu einer Verankerungsstelle verläuft.

Durch die Erfindung ist ein Dreipunkt-Sicherheitsgurtsystem geschaffen, das einen Gurtaufroller enthält, der unter der Sitzfläche eines Fahrzeugsitzes an diesem verankert ist, sowie einen Sicherheitsgurt, dessen erstes Gurtbandende am Fahrzeugaufbau oder an der Rückenlehne des Fahrzeugsitzes verankert und dessen zweites Gurtbandende auf dem Gurtaufroller ausgewickelt ist, und eine verschiebbar auf dem Sicherheitsgurt angebrachte Steckzunge für ein Gurtschloß.

Gegenüber Sicherheitsgurtsystemen mit Umlenkbeschlag ergibt sich durch die erfindungsgemäße Gestaltung der Vorteil, daß die Länge des Sicherheitsgurtes auf ein Mindestmaß verringert ist, da der Gurtbandabschnitt zwischen dem Umlenkbeschlag und dem Gurtaufroller entfallt. Als Folge der geringeren Länge des Sicherheitsgurtes kann die Gurtspule des Gurtaufrollers kleiner ausgeführt werden. Dies führt zu Vorteilen hinsichtlich des Gewichts, des Raumbedarfes und der Kosten des Gurtaufrollers. Außerdem entfällt der Umlenkbeschlag. Auch dies vermindert das Gewicht und die Kosten. Weiterhin kommt es zu einer geringeren Vorverlagerung des Fahrzeuginsassen bei einem Unfall, da es aufgrund der geringeren Länge des Sicherheitsgurtes zu einer geringeren Längenzunahme durch Dehnung des Gurtbandes kommt. Zusätzlich kann der Gurtaufroller dem Fahrzeughersteller bereits im Sitz montiert geliefert werden, wie dies von den Fahrzeugherstellern zunehmend gewünscht wird. Schließlich ergeben sich geringere Gurtbandkräfte beim Anlegen des Sicherheitsgurtes, da wegen des Wegfalls der herkömmlichen Gurtbandumlenkung keinerlei Reibungsverluste am Umlenkbeschlag auftreten.

Gegenüber Sicherheitsgurtsystemen mit an der Hutablage oder in der Rückenlehne angebrachtem Gurtaufroller ergibt sich durch die erfindungsgemäße Gestaltung der Vorteil, daß es aufgrund des vergleichsweise großen Abstandes zwischen dem Gurtaufroller und dem Kopf des Fahrzeuginsassen zu keinen Komforteinbußen für diesen durch beispielsweise Schalt- oder Klappergeräusche des Gurtaufrollers kommt.

Gemäß einer bevorzugten Ausführungsform kann bei einem erfindungsgemäßen Sicherheitsgurtsystem vorgesehen sein, daß die Verankerungsstelle für das erste Gurtbandende an der B-Säule oder der C-Säule gelegen ist und daß der Gurtaufroller auf der dem ersten Gurtbandende benachbarten Seite des Fahrzeugsitzes angeordnet ist. Bei einer solchen Gestaltung wird ein Teil der bei einem Unfall in den Sicherheitsgurt eingeleiteten Last direkt in den Fahrzeugaufbau weitergeleitet. Gegenüber bekannten Sicherheitsgurtsystemen mit Umlenkbeschlag ergibt sich der Vorteil, daß die Verkleidung der B-Säule oder der C-Säule weniger voluminös sein kann, da eine Verankerung des ersten Gurtbandendes des Sicherheitsgurtes platzsparender ausgeführt werden kann als ein Umlenkbeschlag.

Gemäß einer anderen bevorzugten Ausführungsform kann bei einem erfindungsgemäßen Sicherheitsgurtsystem vorgesehen sein, daß die Verankerungsstelle für das erste Gurtbandende am oberen Ende der Rückenlehne gelegen ist und daß der Gurtaufroller auf der dem ersten Gurtbandende benachbarten Seite des Fahrzeugsitzes angeordnet ist. Bei einer solchen Gestaltung kann bereits das gesamte Sicherheitsgurtsystem am Fahrzeugsitz vormontiert werden.

Gemäß einer bevorzugten Ausführungsform der Erfindung kann vorgesehen sein, daß der Gurtaufroller mit einem Gurtstraffer versehen ist. Dies ergibt besondere Vorteile bei einem Unfall, da es bei einer Auslösung des Gurtstraffers überwiegend zu einer Straffung im Beckenbereich des Sicherheitsgurtes kommt.

Weitere vorteilhafte Ausführungsformen der Erfindung sind in den Unteransprüchen gegeben.

Die Erfindung wird nachfolgend unter Bezugnahme auf die beigefügte Zeichnung beschrieben. In dieser zeigen:
- Fig. 1 eine schematische perspektivische Ansicht eines erfindungsgemäßen Sicherheitsgurtsystems; und
- Fig. 2 eine schematischen Vorderansicht eines erfindungsgemäßen Sicherheitsgurtsystems.

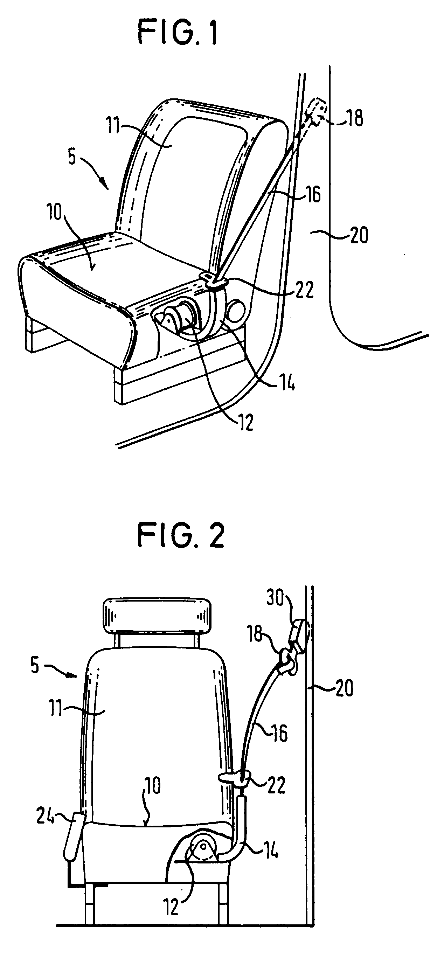

In den Figuren 1 und 2 ist ein erfindungsgemäßes Sicherheitsgurtsystem für einen Vordersitz 5 eines Fahrzeuges dargestellt. Das erfindungsgemäße Sicherheitsgurtsystem kann aber auch bei einem Rücksitz verwendet werden.

Unterhalb der Sitzfläche 10 des Vordersitzes 5 ist an tragenden Teilen des Fahrzeugsitzes ein Gurtaufroller 12 angebracht. Am Gurtaufroller 12 ist eine Führung 14 für einen auf den Gurtaufroller 12 aufwickelbaren Sicherheitsgurt 16 vorgesehen, die diesen seitlich aus der Sitzfläche 10 herausführt. Der Gurtaufroller 12 und die Führung 14 sind so weit unterhalb der Sitzfläche 10 angeordnet, daß es zu keinerlei Komforteinbußen für einen auf dem Fahrzeugsitz sitzenden Insassen kommt. Der Sicherheitsgurt 16 weist ein erstes Gurtbandende 18 auf, das an der B-Säule 20 des Fahrzeuges etwa auf der Höhe des oberen Endes der Rückenlehne 11 verankert ist. Der Gurtaufroller 12 ist auf der dem ersten Gurtbandende 18 benachbarten Seite des Fahrzeugsitzes angeordnet. Auf dem Sicherheitsgurt 16 ist verschiebbar eine Steckzunge 22 für ein Gurtschloß 24 angeordnet. In der in den Figuren dargestellten Ruhestellung, also bei nicht von einem Fahrzeuginsassen angelegtem Sicherheitsgurt 16, verläuft dieser ausgehend von der Führung 14 nach oben hin zur Verankerungsstelle des ersten Gurtbandendes 18 an der B-Säule. Bei von einem Fahrzeuginsassen angelegtem Sicherheitsgurt 16 verläuft dieser ausgehend von der Führung 14 über den Beckenbereich des Fahrzeuginsassen hin zum Gurtschloß 24, wo er von der Steckzunge umgelenkt wird. Danach verläuft der Sicherheitsgurt 16 über den Oberkörper des Fahrzeuginsassen hin zur Verankerungsstelle des ersten Gurtbandendes 18 an der B-Säule.

In Fig. 2 ist ferner ein Hilfsschloß 30 dargestellt, das zwischen dem ersten Gurtbandende 18 und der Verankerungsstelle des Sicherheitsgurtes 16 an der B-Säule 20 angeordnet ist und ermöglicht, das erste Gurtbandende 18 manuell von der B-Säule zu lösen. Dies bietet sich insbesondere bei einem 3-türigen Fahrzeug wie einem Coup an, bei dem der Zugang zu den Rücksitzen bei vorgeklappter Rückenlehne zwischen dem Vordersitz und der B-Säule hindurch erfolgt. Durch ein Freigeben des ersten Gurtbandendes 18 kann der Zugang zu den Rücksitzen erleichtert werden. Vorzugsweise ist an dem Hilfsschloß 30 eine (nicht dargestellte) Schutzabdeckung angebracht, die den Kopf des Fahrzeuginsassen vor Verletzungen durch Berührung mit dem Zusatzschloß schützt.

Gemäß einer nicht dargestellten Ausführungsform der Erfindung kann das erste Gurtbandende des Sicherheitsgurtes auch an der Rückenlehne des Fahrzeugsitzes befestigt sein. Auf diese Weise kommt es bei einem 3-türigen Fahrzeug zu keiner Behinderung des Zugangs zu den Rücksitzen durch den Sicherheitsgurt, da dieser mit der Rückenlehne nach vorne geklappt wird.

Die Steckzunge kann im Bereich der Umlenkung des Sicherheitsgurtes mit einer reibungsmindernden Oberflächengestaltung oder mit einer Umlenkrolle versehen werden, wie dies von Umlenkbeschlägen bekannt ist.

An dem Gurtaufroller kann auch ein (nicht dargestellter) Gurtstraffer vorgesehen sein, mit dem bei einem Unfall die sogenannte Gurtlose aus dem Sicherheitsgurtsystem herausgezogen wird, damit der Fahrzeuginsassen möglichst früh an der Verzögerung des Fahrzeuges teilnimmt.

An dem Gurtaufroller kann auch eine (nicht dargestellte) auf Sitzverstellung ansprechende Inaktivierungsvorrichtung für den Sperrmechanismus des Gurtaufrollers vorgesehen sein, die bei einer Verstellung des Fahrzeugsitzes verhindert, daß die Gurtspule blockiert wird und es zu einer Behinderung des Verstellvorganges des Fahrzeugsitzes kommt.

Das erste Gurtbandende 18 kann auch höhenverstellbar an der B-Säule verankert sein, so daß das Sicherheitsgurtsystem optimal an die Größe des jeweiligen Fahrzeuginsassen angepaßt werden kann. Dadurch kann abweichend von der Darstellung in den Figuren das erste Gurtbandende 18 auch oberhalb des oberen Endes der Rückenlehne 11 angeordnet sein.

## Patentansprüche

1. Dreipunkt-Sicherheitsgurtsystem für Fahrzeuge,
mit einem Gurtaufroller (12), der unter der Sitzfläche (10) eines Fahrzeugsitzes an diesem angebracht ist,
einem Sicherheitsgurt (16), dessen erstes Gurtbandende (18) am Fahrzeugaufbau oder an der Rückenlehne des Fahrzeugsitzes verankert und dessen zweites Gurtbandende auf dem Gurtaufroller (12) aufgewickelt ist,
und einer verschiebbar auf dem Sicherheitsgurt (16) angebrachten Steckzunge (22) für ein Gurtschloß (24).

2. Dreipunkt-Sicherheitsgurtsystem nach Anspruch 1, dadurch gekennzeichnet, daß die Verankerungsstelle für das erste Gurtbandende (18) an der B-Säule oder der C-Säule gelegen ist und daß der Gurtaufroller (12) auf der dem ersten Gurtbandende (18) benachbarten Seite des Fahrzeugsitzes angeordnet ist.

3. Dreipunkt-Sicherheitsgurtsystem nach Anspruch 2, dadurch gekennzeichnet, daß das erste Gurtbandende (18) über einen manuell betätigbaren Verschluß (30) an die B-Säule oder die C-Säule angeschlossen ist.

4. Dreipunkt-Sicherheitsgurtsystem nach Anspruch 1, dadurch gekennzeichnet, daß die Verankerungsstelle für das erste Gurtbandende (18) am oberen Ende der Rückenlehne (11) gelegen ist und daß der Gurtaufroller (12) auf der dem ersten Gurtbandende (18) benachbarten Seite des Fahrzeugsitzes angeordnet ist.

5. Sicherheitsgurtsystem nach einem der vorhergehenden Ansprüche, dadurch gekennzeichnet, daß die Steckzunge (22) im Bereich der Berührung mit dem Sicherheitsgurt (16) eine reibungsmindernde Oberflächengestaltung aufweist.

6. Sicherheitsgurtsystem nach einem der Ansprüche 1 bis 4, dadurch gekennzeichnet, daß die Steckzunge (22) mit einer Umlenkrolle für den Sicherheitsgurt (16) versehen ist.

7. Sicherheitsgurtsystem nach einem der vorhergehenden Ansprüche, dadurch gekennzeichnet, daß der Gurtaufroller (12) mit einem Gurtstraffer versehen ist.

8. Sicherheitsgurtsystem nach einem der vorhergehenden Ansprüche, dadurch gekennzeichnet, daß der Gurtaufroller (12) eine auf Sitzverstellung ansprechende Inaktivierungsvorrichtung für seinen Sperrmechanismus aufweist.

9. Sicherheitsgurtsystem nach einem der vorhergehenden Ansprüche, dadurch gekennzeichnet, daß das erste Gurtbandende (18) höhenverstellbar verankert ist.

10. Sicherheitsgurtsystem nach einem der vorhergehenden Ansprüche, dadurch gekennzeichnet, daß im Bereich des ersten Gurtbandendes (18) eine Schutzabdeckung angebracht ist.

11. Sicherheitsgurtsystem nach einem der vorhergehenden Ansprüche, dadurch gekennzeichnet, daß zwischen dem Gurtaufroller (12) und der Sitzfläche (10) eine Führung (14) für den Sicherheitsgurt (16) vorgesehen ist.
